# FASCICULE DE BREVET EUROPEEN

(11) **EP 2 434 600 B1**
(45) Date de publication et mention de la délivrance du brevet: **20.03.2013**
(21) Numéro de dépôt: 11290417.2
(22) Date de dépôt: 16.09.2011
(51) Int. Cl.: H02G 3/08, H02B 1/40

(54) **Appareillage électrique étanche**
Abgedichtetes elektrisches Gerät
Sealed electrical apparatus

(30) Priorité: 27.09.2010 FR 1003807
(43) Date de publication de la demande: 28.03.2012
(73) Titulaire: Legrand France, 87000 Limoges (FR); Legrand SNC, 87000 Limoges (FR)
(72) Inventeur: Noirot, Didier, 87350 Panazol (FR); Goudal, Jean-Paul, 87000 Limoges (FR)
(74) Mandataire: Orsini, Fabienne

(56) Documents cités:
- DE-A1-102004 015 729
- FR-A1- 2 662 328
- US-A1- 2005 045 360

## Description

### DOMAINE TECHNIQUE AUQUEL SE RAPPORTE L'INVENTION

La présente invention concerne de manière générale l'étanchéité des appareillages électriques.

Elle concerne plus particulièrement un appareillage électrique tel que défini dans le préambule de la revendication 1.

Elle vise plus particulièrement, mais non exclusivement, les dispositifs d'éclairage de sécurité du type de ceux disposés à la vue dans des lieux publics pour porter à la connaissance de chacun une quelconque consigne de sécurité.

### ARRIERE-PLAN TECHNOLOGIQUE

On connaît notamment du document FR 2 752 139 un dispositif autonome d'éclairage de sécurité qui comporte un boîtier isolant, une source de lumière logée dans ce boîtier isolant, et un orifice d'entrée de câble pratiqué dans le boîtier pour la desserte de cette source de lumière.

Dans ce document, le boîtier isolant comporte un socle à fixer au mur par l'intermédiaire d'une patère et un couvercle translucide à rapporter sur le socle pour former un logement d'accueil de la source de lumière. L'orifice d'entrée de câble est ici situé dans la paroi supérieure du socle, ce qui permet d'engager verticalement l'extrémité d'une goulotte ou d'un tube dans le boîtier isolant au travers de cet orifice d'entrée de câble, afin de pouvoir raccorder la source de lumière au réseau électrique local.

L'inconvénient de ce dispositif autonome d'éclairage de sécurité est qu'en cas de fuite d'eau au-dessus du boîtier isolant, il n'est prévu aucun moyen permettant d'éviter que l'eau ne s'infiltre jusqu'à la source de lumière, au risque de générer un court-circuit.

Il est usuel, dès lors, de faire intervenir un joint entre l'orifice d'entrée de câble et la goulotte ou le tube. Le coût de l'ensemble s'en trouve alors toutefois renchéri. L'engagement de la goulotte ou du tube dans l'orifice d'entrée de câble est par ailleurs rendu plus difficile à réaliser.

Pour éviter l'utilisation d'un tel joint, on connaît du document FR 2 662 328 un appareillage électrique du type de celui défini dans l'introduction, qui est en l'espèce constitué par un coffret de distribution électrique, et dont la forme du boîtier isolant permet d'évacuer une partie de l'eau s'infiltrant dans le logement d'accueil des disjoncteurs.

Dans ce document, l'orifice d'entrée de câble est pratiqué dans une paroi supérieure du boîtier qui est destinée à être recouverte par un couvercle amovible. L'engagement d'une goulotte ou d'un tube vers l'intérieur du boîtier isolant est alors réalisé en brisant un opercule défonçable prévu sur le couvercle amovible, puis en insérant cette goulotte ou ce tube au travers de l'ouverture ainsi dégagée et de l'orifice d'entrée de câble pratiqué dans la paroi supérieure du boîtier.

Pour recueillir l'eau s'infiltrant entre le boîtier et le bord du couvercle amovible, la paroi supérieure du boîtier comporte alors une gouttière qui borde l'orifice d'entrée de câble.

L'inconvénient d'une telle gouttière est qu'elle ne permet pas de recueillir l'eau qui s'écoule tout autour des goulottes ou des tubes engagés dans l'orifice d'entrée de câble. Elle ne permet en particulier pas de recueillir l'eau qui s'écoule entre la goulotte ou le tube et la paroi murale.

On connaît par ailleurs des documents DE102004015729 et US2005045360 des dispositifs équipées d'entrées de câble étanches, qui ne permettent toutefois pas de positionner les entrées de câbles horizontalement.

### OBJET DE L'INVENTION

Afin de remédier à l'inconvénient précité de l'état de la technique, la présente invention propose un appareillage électrique tel que défini dans la revendication 1.

Ce réceptacle permet ainsi de recueillir toute l'eau qui s'infiltre entre la goulotte ou le tube et l'orifice d'entrée de câble. Il permet alors d'éviter que cette eau n'atteigne le mécanisme d'appareillage logé dans le boîtier, ce qui lève tout risque de court-circuit.

L'appareillage électrique satisfait dès lors les normes d'étanchéité en vigueur en Europe, et notamment en Espagne, pour tous les boîtiers d'appareillages électriques alimentés par leurs faces supérieures.

Cette norme IPX2 indique en effet que les gouttes tombant sensiblement verticalement sur le boîtier, à 15° d'inclinaison près, ne doivent pas avoir d'effet nuisible sur l'appareillage électrique, ce qui est le cas grâce au réceptacle.

D'autres caractéristiques non limitatives et avantageuses de l'appareillage électrique selon l'invention sont définies dans les revendications 2 et suivantes.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un appareillage électrique selon l'invention, qui comporte un socle dans lequel est engagée l'extrémité d'un tube électrique ;
- la figure 2 est une vue schématique en perspective du socle et de l'extrémité du tube électrique de la figure 1 ; et
- la figure 3 est une vue schématique en coupe selon le plan A-A de la figure 2.

Dans la suite de la description, les termes « avant » et « arrière » désigneront respectivement le lieu situé du côté qui est tourné vers l'installateur de l'appareillage électrique et le lieu situé du côté tourné vers la paroi contre laquelle est rapporté l'appareillage électrique.

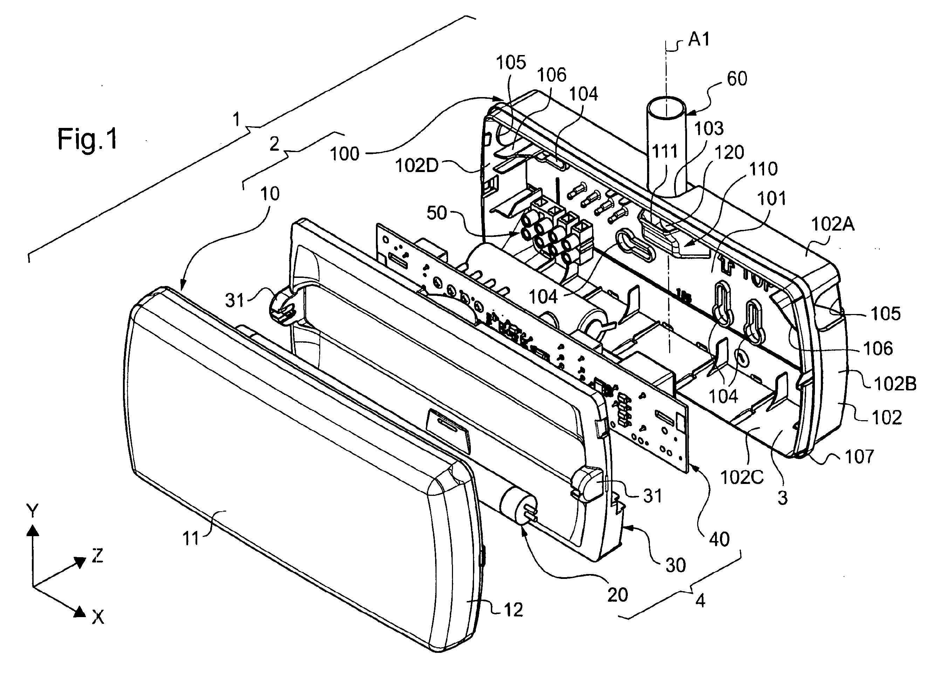

Sur la figure 1, on a représenté schématiquement un appareillage électrique 1 du type à rapporter en saillie sur une paroi quelconque, par exemple une paroi murale.

Cet appareillage électrique 1 comporte un boîtier isolant 2 qui définit intérieurement un logement d'accueil 3 d'un mécanisme d'appareillage 4.

Pour la desserte du mécanisme d'appareillage 4 en courant électrique, le boîtier isolant 2 présente un orifice d'entrée de câble 103 pratiqué dans sa paroi supérieure afin de permettre l'engagement de l'extrémité libre d'un tube de cheminement de câbles (ou tube électrique 60) dans le logement d'accueil 3, par le haut de l'appareillage électrique 1.

Grâce à cet orifice d'entrée de câble 103, le tube électrique 60 peut être positionné verticalement, depuis le plafond jusqu'à l'appareillage électrique 1.

Pour que cet orifice d'entrée de câble 103 soit étanche à l'eau, l'appareillage électrique 1 comporte des moyens de recueil 110 de l'eau s'infiltrant dans le boîtier isolant 2, entre l'orifice d'entrée de câble 103 et l'extrémité libre du tube électrique 60, et des moyens d'évacuation 120 de cette eau vers l'extérieur.

Selon une caractéristique particulièrement avantageuse de l'invention, les moyens de recueil comportent un réceptacle 110 qui est situé à l'intérieur du boîtier isolant 2 et qui est ouvert vers l'orifice d'entrée de câble 103, de telle sorte que les gouttes d'eau qui tombent de l'orifice d'entrée de câble 103 s'écoulent dans ce réceptacle.

Dans le mode de réalisation de l'invention représenté sur la figure 1, l'appareillage électrique est un dispositif d'éclairage 1 autonome de sécurité, du type de ceux visibles dans les lieux publics pour porter à la connaissance de chacun une quelconque consigne ou information de sécurité, telle que par exemple la présence d'une sortie de secours.

Le mécanisme d'appareillage 4 de ce dispositif d'éclairage 1 comporte alors au moins une source de lumière 20, tandis que le boîtier isolant 2 comporte à l'avant une partie translucide ou transparente 10.

Plus précisément, comme cela apparaît sur la figure 1, le boîtier isolant 2 présente globalement une forme de parallélépipède allongé. Il s'étend ainsi en longueur selon un axe longitudinal X, en largeur selon un axe transversal Y et en épaisseur selon un axe frontal Z.

De façon usuelle, en position d'utilisation, le boîtier isolant 2 est rapporté sur la paroi murale de telle sorte que son axe longitudinal X s'étende horizontalement, parallèlement à la paroi murale, que son axe transversal Y s'étende verticalement et que son axe frontal Z s'étende horizontalement, orthogonalement à la paroi murale.

Ce boîtier isolant 2 est pour l'essentiel formé d'un socle creux 100 ouvert en face avant, et d'un couvercle translucide 10 qui ferme le socle creux 100 pour mettre la source de lumière 20 à l'abri dans le logement d'accueil 3.

Le socle creux 100 comporte ici une paroi de fond 101 plane bordée à l'avant par une paroi latérale 102.

Ce socle creux 100 est ici équipé de moyens de fixation 104 à la paroi murale. En variante, il pourrait être équipé de moyens de fixation à une patère elle-même fixée à la paroi murale.

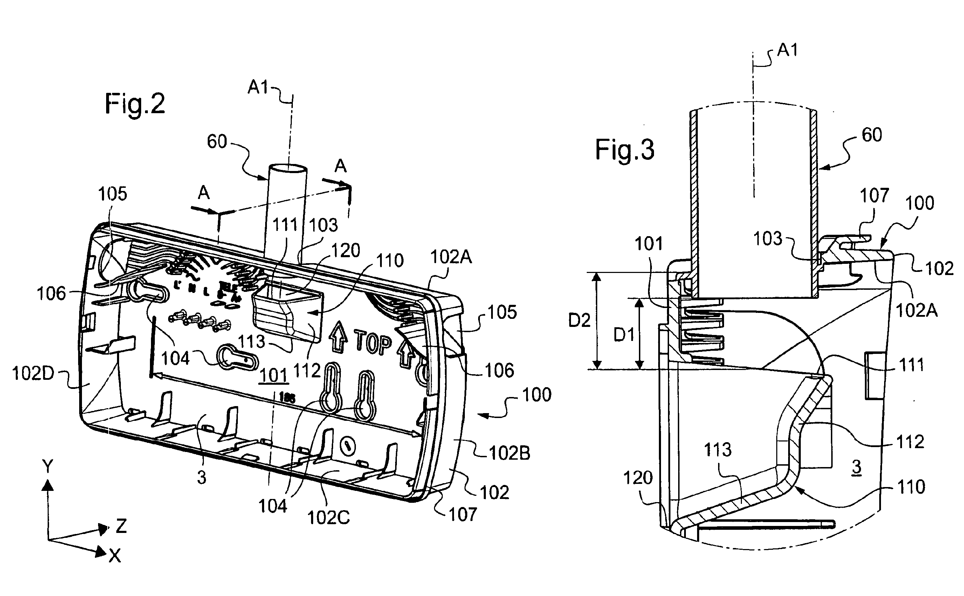

Quoi qu'il en soit, ici, comme le montre plus particulièrement la figure 2, ces moyens de fixation comportent une pluralité d'ouvertures allongées 104 en forme de trous de serrures, pratiquées dans la paroi de fond 101 du socle creux 100.

Pour le passage des têtes de vis de fixation préalablement vissées dans des trous de perçage réalisés dans la paroi murale, ces ouvertures allongées 104 présentent une partie d'extrémité circulaire de diamètre égal, au jeu près, au diamètre des têtes de ces vis de fixation.

Pour former un appui rigide pour les têtes de ces vis de fixation, ces ouvertures allongées 104 présentent une partie oblongue de largeur comprise entre le diamètre des têtes et celui des corps filetés des vis de fixation.

Les ouvertures allongées 104, ici au nombre de quatre, sont disposées suivant deux orientations différentes en vue de faciliter, d'une part, leur centrage en regard des trous de perçages, et, d'autre part, la mise à l'horizontale du socle creux 100.

Ces ouvertures allongées 104 sont ici bordées en face avant par une nervure périphérique permettant de rigidifier les zones de la paroi de fond 101 du socle creux 100 au niveau desquelles les têtes des vis de fixation s'appuieront.

En position d'utilisation, la paroi latérale 102 du socle creux 100 présente un bord inférieur 102C tourné vers le sol, un bord supérieur 102A tourné vers le plafond, et deux bords latéraux 102B, 102D.

Comme le montre plus précisément la figure 1, l'orifice d'entrée de câble 103, au travers duquel est engagé le tube électrique 60, est situé au centre du bord supérieur 102A de la paroi latérale 102 du socle creux 100.

Cet orifice d'entrée de câble 103 présente ici une forme circulaire, pour accueillir l'extrémité ronde du tube électrique 60. En variante, on pourrait bien sûr prévoir que l'orifice d'entrée de câble présente une forme autre, par exemple rectangulaire, adaptée à la forme de l'extrémité libre d'une goulotte électrique.

Ici, comme cela apparaît sur les figures 1 et 2, les deux bords latéraux 102B, 102D de la paroi latérale 102 du socle creux 100 présentent chacun un orifice latéral d'entrée de câble 105, pour permettre la desserte du mécanisme d'appareillage 4 par des tubes électriques courant horizontalement le long de la paroi murale.

Comme le montre la figure 2, pour éviter que des gouttes d'eau ne s'infiltrent dans le boîtier isolant 2 par ces orifices latéraux d'entrée de câble 105, le socle creux 100 comporte intérieurement deux déflecteurs 106 qui s'étendent à partir des bords inférieurs des orifices latéraux d'entrée de câble 105, et qui sont inclinés à environ 30 degrés par rapport au plan horizontal (X, Z), en direction du bord supérieur 102A de la paroi latérale 102 du socle creux 100. Ces déflecteurs 106 permettent ainsi de refouler vers l'extérieur les gouttes d'eau qui se seraient infiltrées dans le boîtier isolant 2.

Comme le montre la figure 1, la paroi latérale 102 du socle creux 100 porte sur sa face externe, à proximité de l'ouverture avant du socle creux, un trottoir 107 périphérique.

Le couvercle translucide 10 comporte quant à lui une paroi frontale 11 qui est bordée à l'arrière par un bord tombant 12 dont la tranche arrière est prévue pour s'appliquer sur le trottoir 107 du socle creux 100.

Le bord tombant 12 du couvercle translucide 10 est ici équipé sur sa face intérieure de moyens d'encliquetage (non visibles sur les figures) adaptés à s'encliqueter sur des moyens d'encliquetage complémentaires prévus sur le socle creux 100 afin de fermer rigidement le boîtier isolant 2.

Ce couvercle translucide 10 est ici réalisé d'une seule pièce par moulage en matière plastique transparente. La face extérieure de sa paroi frontale 11 peut par ailleurs être revêtue d'un autocollant illustrant l'information de sécurité désirée (dans le cas où le dispositif d'éclairage 1 est un bloc d'évacuation) ou peut être laissée vierge (dans le cas où le dispositif d'éclairage 1 est un bloc d'éclairage de secours).

Tel que représenté sur la figure 1, le mécanisme d'appareillage 4 comporte quant à lui un néon 20 qui forme ladite source de lumière, un support 30 pour supporter le néon 20, et une carte électronique 40.

Le support 30 présente ici une forme globale de plaque plane à fixer par encliquetage à l'intérieur du socle creux 100, parallèlement à la paroi de fond 101 de ce socle creux 100. Pour supporter et alimenter le néon, ce support 30 comporte, en saillie des deux extrémités de sa face avant, deux ergots 31 qui sont ouverts en vis-à-vis par deux cavités logeant deux douilles de connexion du néon 20.

La carte électronique 40 se présente pour sa part sous la forme d'un circuit imprimé à l'arrière duquel sont fixés des composants électriques. Elle comporte des premiers moyens de connexion aux douilles du support 30 pour alimenter le néon 20 en courant (non visibles sur les figures), et des seconds moyens de connexion aux conducteurs électriques qui débouchent du tube électrique 60. Ces seconds moyens de connexion sont plus précisément ici prévus pour se connecter aux conducteurs électriques par l'intermédiaire de dominos 50.

La carte électronique 40 est ici agencée pour être fixée dans le logement d'accueil 3, entre la paroi de fond 101 du socle creux 100 et le support 30, parallèlement à ceux-ci. Elle est ainsi prévue pour être située en dessous de l'orifice d'entrée de câble 103.

Pour éviter que l'eau qui s'écoule le long de la face externe du tube électrique 60 s'infiltre dans le boîtier isolant 2 et goutte sur le circuit électrique 40, le réceptacle 110 selon l'invention est situé au droit de l'orifice d'entrée de câble 103, entre cet orifice et la carte électronique 40.

Il est ainsi situé dans l'axe A1 de l'orifice d'entrée de câble 103. En pratique, cet axe A1 étant vertical, le réceptacle est situé sous l'orifice d'entrée de câble 103.

Comme le montrent plus particulièrement les figures 2 et 3, le réceptacle 110 forme une cuvette accrochée à la paroi de fond 101 du socle creux 100, qui est ouverte vers l'orifice d'entrée de câble 103 pour recueillir les gouttes d'eau.

Le réceptacle 110 présente un fond 113 bordé à l'avant par un rebord 112.

Le fond 113 est ici constitué par une paroi plane qui s'étend à partir de la paroi de fond 101 du socle creux 100, parallèlement à l'axe longitudinal X. Ce fond 113 est ici légèrement incliné par rapport au plan horizontal (X,Z), en direction du haut du socle creux 100, pour que l'eau recueillie s'écoule naturellement vers la paroi de fond 101 du socle creux 100.

Le rebord 112 s'élève quant à lui sensiblement verticalement à partir des trois bords libres du fond 113 du réceptacle 110. La tranche de ce rebord 112 délimite avec la paroi de fond 101 du socle creux 100 une ouverture d'entrée 111 par laquelle les gouttes d'eau entrent dans le réceptacle 110. Cette ouverture d'entrée s'étend dans un plan sensiblement parallèle à celui de l'orifice d'entrée de câble 103.

Cette ouverture d'entrée 111 est située au droit de l'orifice d'entrée de câble 103 du socle creux 100, c'est-à-dire sensiblement dans l'axe A1 de cet orifice d'entrée de câble 103.

Pour permettre au réceptacle 110 de recueillir l'ensemble des gouttes d'eau qui s'écoulent entre le tube électrique 60 et l'orifice d'entrée de câble 103, l'ouverture d'entrée 111 du réceptacle 110 présente une section de taille supérieure ou égale à celle de l'orifice d'entrée de câble 103. Cette ouverture d'entrée 111 est en outre située de telle sorte que l'orifice d'entrée de câble 103 se superpose entièrement au-dessus d'elle.

Autrement formulé, le contour de l'ouverture d'entrée 111 du réceptacle 110 est tel qu'en projection dans le plan horizontal (X, Z), il entoure le contour de l'orifice d'entrée de câble 103.

L'ouverture d'entrée 111 du réceptacle 110 est située à une distance moyenne D2 de l'orifice d'entrée de câble 103 qui est comprise entre la moitié et l'intégralité du diamètre de l'orifice d'entrée de câble 103.

Le réceptacle 110 est ainsi situé suffisamment loin de l'orifice d'entrée de câble 103 pour que les conducteurs électriques sortant du tube électrique 60 puissent entrer à l'intérieur du boîtier isolant 2 en contournant ce réceptacle 110. Tels que représentés sur la figure 3, les conducteurs électriques disposent d'une longueur D1 pour contourner le réceptacle 110.

Le réceptacle 110 est par ailleurs situé suffisamment près de l'orifice d'entrée de câble 103 pour que la carte électronique 40 puisse se loger en dessous de ce réceptacle.

Comme le montre plus particulièrement la figure 3, les moyens d'évacuation des gouttes d'eau hors du réceptacle 110 sont ici formés par une simple ouverture de sortie 120 qui est pratiquée dans la paroi de fond 101 du socle creux 100 du boîtier isolant 2. Cette ouverture de sortie 120 s'étend avantageusement en hauteur à partir du fond 113 du réceptacle 110, pour éviter que de l'eau ne stagne au fond du réceptacle 110.

Ici, cette ouverture de sortie 120 s'étend sur toute la hauteur et sur toute la largeur du réceptacle 110.

Elle permet de rejeter l'eau recueillie dans le réceptacle 110 vers l'espace situé entre la paroi murale et la paroi de fond 101 du socle creux 100 du boîtier isolant 2.

Ici, le socle creux 100 est formé d'une seule pièce, avec son réceptacle 110, par moulage d'une matière plastique isolante telle que l'ABS (acrylonitrile butadiène styrène) ou autre.

Il est avantageusement moulé de telle sorte que chacun de ses orifices d'entrée de câble 103, 105 est initialement obturé par un opercule défonçable.

Avant la mise en place de l'appareillage électrique 1 sur la paroi murale, l'installateur doit alors briser l'un des opercules défonçables qui obturent les orifices d'entrée de câble 103, 105.

Il brise ici l'opercule défonçable qui obture l'orifice d'entrée de câble 103 situé sur le bord supérieur 102A de la paroi latérale 102 du socle creux 100.

Le socle creux 100 est ensuite fixé à la paroi murale à l'aide de deux vis de fixation préalablement vissées dans des trous de perçage réalisés dans la paroi murale, en engageant les têtes de ces vis de fixation au travers des ouvertures allongées 104 prévues dans la paroi de fond 101 du socle creux 110 puis en vissant ces vis de fixation de telle manière que leurs têtes s'appuient contre les bords des ouvertures allongées 104.

L'extrémité libre du tube électrique 60 est alors engagée dans l'orifice d'entrée de câble 103 du boîtier isolant 2. Les extrémités des conducteurs électriques tirés dans ce tube électrique 60 sont alors dénudées puis branchées sur les dominos 50.

Puis, la carte électronique 40 est approchée du socle creux 100 et est connectée aux dominos 50. Elle est ensuite encliquetée dans le logement d'accueil 103 défini à l'intérieur du socle creux 100.

Le support 30 est à son tour connecté au circuit électrique 40, puis rapporté dans le socle creux 100 afin de s'encliqueter sur celui-ci. Le néon 20 est alors mis en place sur ce support 30.

Enfin, le couvercle translucide 10 est rapporté sur le socle creux 100 puis encliqueté sur celui-ci afin de fermer le boîtier isolant 2.

La présente invention n'est nullement limitée au mode de réalisation décrit et représenté, mais l'homme du métier saura y apporter toute variante conforme à son esprit.

On pourra en particulier prévoir que le réceptacle présente une forme différente. Il pourra à titre d'exemple présenter une forme de verre à pied s'étendant à partir du bord inférieur de la paroi latérale du socle creux, jusqu'en dessous de l'orifice d'entrée de câble. Il pourrait également présenter une forme de gouttière circulaire s'étendant sous l'orifice d'entrée de câble, le long du bord périphérique de celui-ci.

Les moyens d'évacuation de l'eau contenue dans le réceptacle pourraient également présenter une forme différente. Ils pourraient par exemple être formés par un canal ou un conduit faisant communiquer le fond du réceptacle avec une ouverture prévue dans le boîtier isolant.

Sur les figures 1 à 3, l'appareillage électrique est formé par un dispositif d'éclairage autonome de sécurité.

Il pourrait également être formé par un tout autre type d'appareillage destiné à être rapporté en saillie sur une paroi et à être alimenté au travers d'un orifice d'entrée de câble pratiqué dans sa face supérieure.

A titre d'exemples non limitatifs, cet appareillage électrique pourrait être formé par un dispositif de signalisation ou par une enseigne électrique, par une prise de courant ou par un interrupteur, ou encore par un coffret de distribution électrique.

## Revendications

1. Appareillage électrique (1) comportant un boîtier isolant (2) qui définit intérieurement un logement d'accueil (3) d'un mécanisme d'appareillage (4) et qui comprend :
- un orifice d'entrée de câble (103) pour la desserte dudit mécanisme d'appareillage (4),
- des moyens de recueil (110) de l'eau s'infiltrant dans le boîtier isolant (2), comportant un réceptacle (110) qui est situé à l'intérieur dudit boîtier isolant (2), et
- des moyens d'évacuation (120) de cette eau vers l'extérieur,
ledit réceptacle (110) étant ouvert vers ledit orifice d'entrée de câble (103) par une ouverture d'entrée (111) qui est située, au droit dudit orifice d'entrée de câble (103) **caractérisé en ce que** le contour de ladite ouverture est tel qu'en projection orthogonale dans le plan de l'orifice d'entrée de câble (103), il entoure le contour de cet orifice d'entrée de câble (103).

2. Appareillage électrique (1) selon la revendication précédente, dans lequel ledit réceptacle (110) est ouvert vers ledit orifice d'entrée de câble (103) par une ouverture d'entrée (111) de section supérieure ou égale à celle dudit orifice d'entrée de câble (103).

3. Appareillage électrique (1) selon l'une des revendications précédentes, dans lequel ledit réceptacle (110) est ouvert vers ledit orifice d'entrée de câble (103) par une ouverture d'entrée (111) qui est située à une distance moyenne (D2) dudit orifice d'entrée de câble (103) qui est strictement supérieure à la moitié de la plus petite dimension dudit orifice d'entrée de câble (103).

4. Appareillage électrique (1) selon l'une des revendications précédentes, dans lequel, ledit boîtier (2) comportant un socle (100) qui est ouvert à l'avant, ledit réceptacle (110) est issu de moulage d'une seule pièce avec ce socle (100).

5. Appareillage électrique (1) selon l'une des revendications précédentes, dans lequel, ledit boîtier isolant (2) comportant une paroi de fond (101) à rapporter contre une paroi quelconque, le réceptacle (110) s'étend à partir de la paroi de fond (101), vers l'intérieur dudit boîtier isolant (2).

6. Appareillage électrique (1) selon l'une des revendications précédentes, dans lequel, ledit boîtier isolant (2) comportant une paroi de fond (101) à rapporter contre une paroi quelconque, lesdits moyens d'évacuation comportent une ouverture de sortie (120) pratiquée dans la paroi du fond (101) du boîtier isolant (2), qui communique avec ledit réceptacle (110).

7. Appareillage électrique (1) selon la revendication précédente, dans lequel ladite ouverture de sortie (120) débouche dans le fond dudit réceptacle (110).

8. Appareillage électrique (1) selon l'une des revendications précédentes, dans lequel ledit orifice d'entrée de câble (103) est obturé par un opercule défonçable.

9. Appareillage électrique (1) selon l'une des revendications précédentes, dans lequel le mécanisme d'appareillage est un mécanisme de bloc d'éclairage de sécurité (4) et dans lequel le boîtier isolant (2) comporte un socle (100) fermé à l'avant par un capot (10) transparent ou translucide.

## Claims

1. Electrical equipment (1) comprising an insulating box (2) internally defining a reception housing (3) for receiving an equipment mechanism (4) and that comprises:
• a cable inlet orifice (103) for serving said equipment mechanism (4);
• means (110) for collecting water that infiltrates into the insulating box (2), the means comprising a receptacle (110) that is situated inside said insulating box (2); and
• means (120) for discharging the water to the outside;
said receptacle (110) being open towards said cable inlet orifice (103) via an inlet opening (111) that is situated in register with said cable inlet orifice (103), the equipment being **characterized in that** the outline of said opening is such that in orthogonal projection onto the plane of the cable inlet orifice (103) it surrounds the outline of said cable inlet orifice (103).

2. Electrical equipment (1) according to the preceding claim, wherein said receptacle (110) is open towards said cable inlet orifice (103) via an inlet opening (111) of section that is greater than or equal to the section of said cable inlet orifice (103).

3. Electrical equipment (1) according to either preceding claim, wherein said receptacle (110) is open towards said cable inlet orifice (103) via an inlet opening (111) that is situated at an average distance (D2) from said cable inlet orifice (103) that is strictly greater than half the smallest dimension of said cable inlet orifice (103).

4. Electrical equipment (1) according to any preceding claim, wherein said box (2) includes a base (100) that is open to the front, said receptacle (110) being integrally molded with the base (100).

5. Electrical equipment (1) according to any preceding claim, wherein said insulating box (2) has a back wall (101) for fitting against any wall, and the receptacle (110) extends from the back wall (101) towards the inside of said insulating box (2).

6. Electrical equipment (1) according to any preceding claim, wherein said insulating box (2) has a back wall (101) for fitting against any wall, and said discharge means comprise an outlet opening (120) formed in the back wall (101) of the insulating box (2) which opening communicates with said receptacle (110).

7. Electrical equipment (1) according to the preceding claim, wherein said outlet opening (120) opens out into the bottom of said receptacle (110).

8. Electrical equipment (1) according to any preceding claim, wherein said cable inlet orifice (103) is closed by a removable diaphragm.

9. Electrical equipment (1) according to any preceding claim, wherein the equipment mechanism is an emergency lighting block mechanism (4) and wherein the insulating box (2) comprises a base (100) closed in front by a cover (10) that is transparent or translucent.

## Patentansprüche

1. Elektrisches Gerät (1) mit einem isolierenden Gehäuse (2), das im Innenraum eine Aufnahme (3) für einen Gerätemechanismus (4) definiert und umfasst:
- eine Kabeleinführöffnung (103) für den Anschluss des Gerätemechanismus (4),
- Aufnahmemittel (110) für das Wasser, das in das isolierende Gehäuse (2) einsickert, mit einem Behälter (110), der sich im Innenraum des isolierenden Gehäuses (2) befindet,
- Ablaufmittel (120) für dieses Wasser nach außen, wobei der Behälter (110) über eine Einführöffnung (111), die sich vor der Kabeleinführöffnung (103) befindet, zur Kabeleinführöffnung (103) hin geöffnet ist, **dadurch gekennzeichnet, dass** die Kontur dieser Öffnung derart ist, dass sie in Orthogonalprojektion in der Ebene der Kabeleinführöffnung (103) die Kontur dieser Kabeleinführöffnung (103) umgibt.

2. Elektrisches Gerät (1) nach vorausgehendem Anspruch, bei dem der Behälter (110) über eine Einführöffnung (111), deren Querschnitt größer gleich dem der Kabeleinführöffnung (103) ist, zur Kabeleinführöffnung (103) hin geöffnet ist.

3. Elektrisches Gerät (1) nach einem der vorausgehenden Ansprüche, bei dem der Behälter (110) über eine Einführöffnung (111), die sich in mittlerem Abstand (D2) der Kabeleinführöffnung (103) befindet, welche unbedingt größer ist als die Hälfte der kleinsten Dimension der Kabeleinführöffnung (103), zur Kabeleinführöffnung (103) hin geöffnet ist.

4. Elektrisches Gerät (1) nach einem der vorausgehenden Ansprüche, bei dem der Behälter (110), während das Gehäuse (2) einen nach vorne offenen Sockel (100) umfasst, zusammen mit dem Sockel (100) aus einem einzigen Teil geformt ist.

5. Elektrisches Gerät (1) nach einem der vorausgehenden Ansprüche, bei dem der Behälter (110), während das isolierende Gehäuse (2) eine Bodenwand (101) umfasst, die an einer beliebigen Wand aufzusetzen ist, von der Bodenwand (101) ausgehend sich ins Innere des isolierenden Gehäuses (2) erstreckt.

6. Elektrisches Gerät (1) nach einem der vorausgehenden Ansprüche, bei dem die Ablaufmittel, während das isolierende Gehäuse (2) eine an einer beliebigen Wand aufzusetzende Bodenwand (101) umfasst, eine in die Bodenwand (101) des isolierenden Gehäuses (2) eingearbeitete Ausgangsöffnung (120) umfassen, die mit dem Behälter (110) verbunden ist.

7. Elektrisches Gerät (1) nach vorausgehendem Anspruch, bei dem die Ausgangsöffnung (120) in den Boden des Behälters (110) mündet.

8. Elektrisches Gerät (1) nach einem der vorausgehenden Ansprüche, bei dem die Kabeleinführöffnung (103) durch eine eindrückbare Kappe verschlossen ist.

9. Elektrisches Gerät (1) nach einem der vorausgehenden Ansprüche, bei dem der Gerätemechanismus ein Sicherheitsbeleuchtungsblock (4) ist und in dem das isolierende Gehäuse (2) einen nach vorne durch einen durchsichtigen oder lichtdurchlässigen Deckel (10) abgeschlossenen Sockel (100) umfasst.
